# EUROPEAN PATENT SPECIFICATION

(11) **EP 2 216 533 B1**
(45) Date of publication and mention of the grant of the patent: **25.01.2017**
(21) Application number: 10153213.3
(22) Date of filing: 10.02.2010
(51) Int. Cl.: F02D 41/14, F02D 41/34, F02D 41/24, F02D 41/40

(54) **Fuel injection control device for internal combustion engine**
Kraftstoffeinspritzsteuervorrichtung für eine Brennkraftmaschine
Dispositif de contrôle d'injection de carburant pour moteur à combustion interne

(30) Priority: 10.02.2009 JP 2009028931
(43) Date of publication of application: 11.08.2010
(73) Proprietor: TOYOTA JIDOSHA KABUSHIKI KAISHA, Toyota-shi, Aichi-ken, 471-8571 (JP)
(72) Inventor: Amano, Naoki, Toyota-shi, Aichi-ken 471-8571 (JP)
(74) Representative: Intès, Didier Gérard André

(56) References cited:
- EP-A- 1 327 764
- EP-A- 1 340 900
- EP-A- 1 491 751
- US-A1- 2005 092 300
- US-A1- 2009 030 590

## Description

### BACKGROUND OF THE INVENTION

### 1. Field of the Invention

The invention relates to a fuel injection control device in an internal combustion engine such as a diesel engine, that performs learning control in order to set appropriate fuel injection amount. In particular, the invention relates to fuel injection control in an internal combustion engine that is connected to an automated manual transmission (referred to also as an automatically controlled manual transmission).

### 2. Description of the Related Art

For example, as described in Japanese Patent Application Publication No. 2005-139951 (JP-A-2005-139951) and Japanese Patent Application Publication No. 2007-187009 (JP-A-2007-187009), in an internal combustion engine such as a vehicular diesel engine, a pilot injection is carried out to inject a minute amount of fuel into cylinders before the main injection, to reduce the level of combustion noise and the discharge amount of NOx.

In an engine in which such pilot injection is carried out, the optimal amount of fuel injected in the pilot injection depends on the operation state of the engine. In general, the pilot injection is carried out in a target pilot injection amount that may be calculated on the basis of an engine rotational speed or the like. This pilot injection amount depends on the cylinder capacity of the engine, but is approximately several cubic millimeters. More specifically, the control of opening/closing a fuel injection valve (hereinafter referred to also as an injector) (the control of the valve-open time thereof) is performed in accordance with the pressure of fuel injection. See for example US 2009/030590 A1.

However, problems may occur due to a dispersion of the fuel injection amount resulting from differences among individual fuel injection systems (an individual dispersion) or time-dependent changes in the fuel injection amount. Differences among individual injectors employed in the fuel injection systems (a dispersion of the amount of injection), individual differences among respective sensors (a dispersion of a sensor output), and time-dependent changes in the characteristics of the injectors (a deterioration in the injectors) cause a discrepancy between a target pilot injection amount calculated by a microcomputer or the like and an actual pilot injection amount, namely, an amount of fuel actually injected during pilot injection. When such a discrepancy occurs, an appropriate pilot injection amount is not set Then, when the actual pilot injection amount greatly deviates from the target pilot injection amount, an increase in the level of combustion noise, an increase in the discharge amount of particulate matters (PM), misfiring of the engine, and the like may be caused.

Thus, the aforementioned publications, namely, Japanese Patent Application Publication No. 2005-139951 (JP-A-2005-139951) and Japanese Patent Application Publication No. 2007-187009 (JP-A-2007-187009) describe an operation of a learning function to determine the amount of the pilot injection in a common rail-type diesel engine.

As described above, in pilot injection, the valve-open time of the injector is appropriately set in accordance with the fuel injection pressure to inject the target pilot injection amount. Thus, an engine ECU installed in a control system of the engine has stored therein a pilot injection amount setting map, in which relationships between the pilot injection amount and the duration of the energization of the injector (the valve-open time) are stored for a plurality of levels (e.g., four levels) of common rail pressures (e.g., 30 MPa, 60 MPa, 90 MPa, and 120 MPa) respectively for each of cylinders (each of the injectors). That is, the duration of the energization of the injector at a particular common rail pressure is calculated in accordance with the pilot injection amount setting map so as to set the target pilot injection amount determined in accordance with the engine rotational speed or the like.

The operation of learning the pilot injection amount is designed to allow pilot injection to be carried out in an appropriate pilot injection amount even in the case of an individual dispersion among the fuel injection systems or time-dependent changes in the amount of injection by appropriately correcting the learning value on the pilot injection amount setting map.

In this learning operation, more specifically, when no fuel is injected with a command injection amount for the injector equal to 0 (e.g., when the opening degree of an accelerator becomes equal to "0" while running), a minute amount of fuel tantamount to the pilot injection amount is injected into a specific one of the cylinders (e.g., that one of the cylinders whose piston is located close to a top dead center) (this fuel injection will be referred to hereinafter as "single injection"), and an amount of change in engine rotational speed or the like (an amount of change in engine operation state) resulting from this single injection is recognized. Data on the amount of change in engine operation state in the case where single injection is carried out in an exact amount are compared with an amount of change in engine operation state in the case where single injection is actually carried out, and the learning value on the pilot injection amount setting map is corrected in accordance with a discrepancy therebetween. This operation is performed individually for each of common rail pressures on the pilot injection amount setting map and for each of the cylinders. In this manner, pilot injection can be carried out for all the cylinders in an appropriate pilot injection amount regardless of the common rail pressure.

Further, when a learning execution condition comes to be not satisfied through a driver's operation of depressing an accelerator pedal or the like during this learning operation, the learning operation is suspended.

Meanwhile, as disclosed in Japanese Patent Application Publication No. 2008-151328 (JP-A-2008-151328), there is known an automated manual transmission (referred to as an AMT or an MMT) that automatically performs a gear change operation (changing between gears) by means of a shift actuator or a select actuator. An automatic clutch that is selectively engaged and disengaged by the actuator is applied to connect this automated manual transmission to a drive source such as an engine or the like.

In an engine connected to such an automated manual transmission as well, the learning operation of the fuel injection amount through single injection as described above is performed. In this case as well, as soon as a torque increase request from the automated manual transmission is made in response to the driver's operation of depressing the accelerator pedal, the learning operation is suspended.

However, in the engine to which the automated manual transmission is connected, when single injection through the learning control is carried out, the following inconvenience may occur upon the driver's operation of depressing the accelerator pedal in a situation where the common rail pressure is relatively high, namely, in a situation where the learning operation is performed with the learning fuel pressure set high.

When a torque increase request from the automated manual transmission is made in response to the driver's operation of depressing the accelerator pedal, a relatively large amount of fuel is injected into the cylinder within a short time so as to meet the request. In this case, even when the learning operation is suspended, fuel injection is started with the common rail pressure still remaining high. Thus, rapid combustion of a mixture occurs (a large amount of heat is generated per unit time) to cause a relatively loud combustion noise. As described above, the learning control of the pilot injection amount is often performed in a situation where the command injection amount for the injector is 0, for example, where the opening degree of the accelerator is "0". When a transition is made from this situation to a situation where a relatively loud combustion noise is generated, passengers including the driver and the like may feel a sense of incongruity.

In the automated manual transmission, smoothing control is not performed during fuel injection amount control in the case where the operation of depressing the accelerator pedal is performed, with a view to increasing the speed of a gearshift to shorten the time required for a gear change. That is, when a torque increase request from the automated manual transmission is made in response to the operation of depressing the accelerator pedal, the amount of fuel injection is increased substantially simultaneously therewith. Thus, the problem of combustion noise as described above is remarkable. It should be noted that smoothing control of the fuel injection amount is performed in the case of a conventional manual transmission (MT). Thus, the common rail pressure decreases in response to the suspension of the learning operation, and becomes relatively low at the beginning of fuel injection. Therefore, the inconvenience of an increase in the level of combustion noise is relatively unlikely to be caused.

### SUMMARY OF THE INVENTION

The invention provides a fuel injection control device that suppresses an increase in the level of combustion noise generated in response to the suspension of learning control of a fuel injection amount.

In a first aspect of the invention, learning control of a fuel injection amount as described above is prohibited at a timing when a request for a gear change in an automated manual transmission is made. An operation of reducing a fuel pressure is thereby started at a timing earlier than a torque increase request resulting from a gear change operation. Thus, when fuel is injected in accordance with the torque increase request, fuel injection can be carried out at a relatively low fuel pressure.

More specifically, the first aspect of the invention relates to a fuel injection control device that carries out fuel injection from a fuel injection valve into a specific cylinder of a vehicular internal combustion engine to which an automatically controlled manual transmission is connected and performs fuel injection amount learning control to correct an fuel injection amount on a basis of a change in an operation state of the internal combustion engine resulting from the fuel injection, in the vehicular internal combustion engine. In the first aspect of the invention, this fuel injection control device includes learning control prohibition means for prohibiting the fuel injection amount learning control at a timing when a request for a gear change in the automatically controlled manual transmission is made during performance of the fuel injection amount learning control.

In the first aspect of the invention, the learning control prohibition means perform fuel pressure reduction control to reduce a pressure of fuel supplied to the fuel injection valve substantially simultaneously with prohibition of the fuel injection amount learning control.

Owing to this construction, when a request for a gear change in the automatically controlled manual transmission is made during the performance of the fuel injection amount learning control, the fuel injection amount learning control is prohibited at a timing earlier than a torque increase request resulting from an operation of the gear change. Accordingly, if the fuel pressure is set high in the fuel injection amount learning control, it is possible to start lowering the fuel pressure at an early timing. Thus, during fuel injection corresponding to the torque increase request, fuel injection is carried out at a relatively low fuel pressure. Thus, the level of combustion noise can be held low.

In a concrete method of performing the fuel pressure reduction control, the pressure of fuel at a timing when fuel injection corresponding to a gear change in the automatically controlled manual transmission is started may be reduced to such a pressure that a level of combustion noise falls to or below a predetermined noise level.

Thus, the fuel pressure at the timing when fuel injection is started can be set to such a value that the level of combustion noise is equal to or lower than the predetermined noise level. For example, it is possible to mention a method of reducing the pressure to a predetermined fuel pressure through the control of a pump that supplies fuel to the fuel injection valve, a method of adjusting the opening degree of an adjustment valve such as a relief valve or the like, which is provided in a fuel supply path leading to the fuel injection valve, to reduce the pressure to the predetermined fuel pressure, and the like.

The following construction may be adopted as a measure against a case where a large torque is required during the gear change. That is, the first aspect of the invention may have smoothing control means for performing smoothing control of a fuel injection amount during a gear change in the automatically controlled manual transmission when a torque of the internal combustion engine required during the gear change in the automatically controlled manual transmission is larger than a predetermined combustion noise limit torque. Further, the smoothing control means may reduce an increase in the fuel injection amount per unit time when the required torque is larger than the combustion noise limit torque to less than the increase when the required torque is equal to or smaller than the combustion noise limit torque.

The smoothing control gives higher priority to the suppression of the level of combustion noise than to the responsiveness of a gear change. Accordingly, owing to the aforementioned construction, the level of combustion noise can be held low even when a large torque is required during the gear change.

Further, the fuel pressure reduction control performed by the learning control prohibition means may have a pressure reduction speed that is higher than a pressure reduction speed of fuel pressure reduction control that is performed when the fuel injection amount learning control is not prohibited.

Further, the fuel injection amount learning control may be performed to correct an fuel injection amount of pilot injection.

In the first aspect of the invention, the fuel injection amount learning control is prohibited at a timing when a request for a gear change in the automated manual transmission is made, and the operation of reducing the fuel pressure is thereby started at a timing earlier than a torque increase request resulting from a gear change operation. As a result, fuel injection can be carried out at a relatively low fuel pressure during fuel injection corresponding to the torque increase request. Thus, the level of combustion noise can be restrained from increasing due to the suspension of the learning control.

### BRIEF DESCRIPTION OF THE DRAWINGS

The features, advantages, and technical and industrial significance of this invention will be described in the following detailed description of an example embodiment of the invention with reference to the accompanying drawings, in which like numerals denote like elements, and wherein:
FIG. 1 is a view showing an overall configuration of a power train of a vehicle according to the embodiment of the invention;
FIG. 2 is a view showing an overall construction of a fuel injection system of an engine;
FIG. 3 is a cross-sectional view showing a construction of an automatic clutch;
FIG. 4 is a view showing a gear change operation device of an automated manual transmission;
FIG. 5 is a perspective view of a shift device;
FIG. 6 is a view showing a control block including an engine ECU and a transmission ECU;
FIG. 7 is a view showing a gear change map used for gear change control;
FIG. 8 is a flowchart showing a procedure of fuel injection control during fuel injection amount learning control;
FIG. 9 is a view showing changes in fuel pressure during the prohibition of the learning of a fuel injection amount;
FIG. 10 is a flowchart showing a procedure of fuel injection control during fuel injection amount learning control according to a modification example of the embodiment of the invention; and
FIG. 11 is a view showing changes in the fuel injection amount with respect to a required torque of a transmission according to the modification example of the embodiment of the invention.

### DETAILED DESCRIPTION OF EMBODIMENT

The embodiment of the invention will be described hereinafter with reference to the drawings. In this embodiment of the invention, an example in which the invention is applied to a common rail-type diesel engine (an internal combustion engine) will be described.

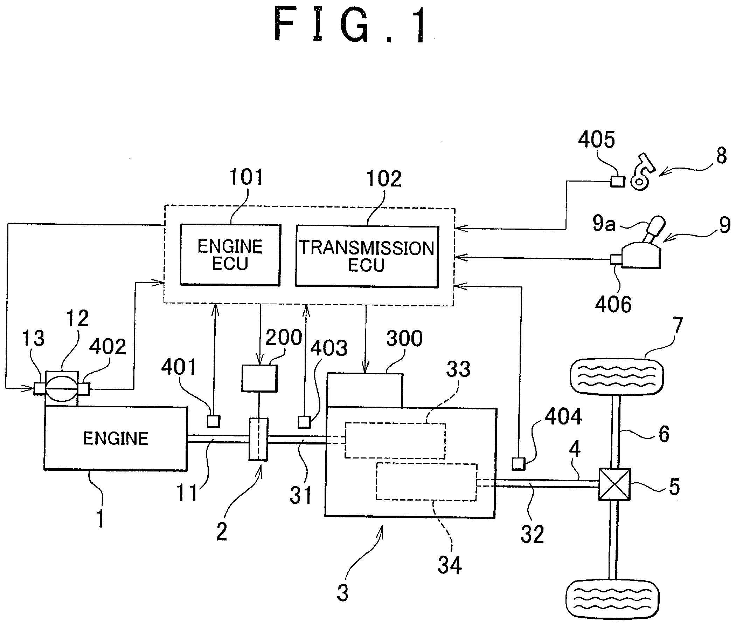

FIG. 1 shows the overall construction of the powertrain of a vehicle according to this embodiment of the invention. As shown in this FIG. 1, the powertrain of the vehicle is equipped with an engine 1, an automatic clutch 2, a transmission 3. an engine ECU 101, and a transmission ECU 102. These components, namely, the engine 1, the automatic clutch 2, the transmission 3, and the respective ECUs 101 and 102 will be described hereinafter.

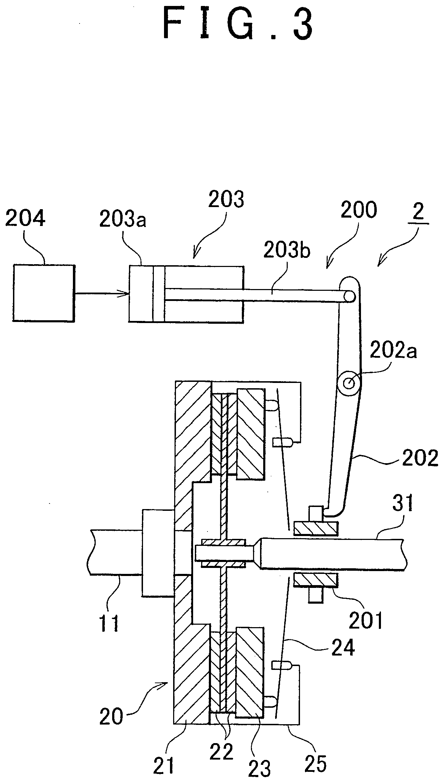

- Engine - A crankshaft 11 which serves as an output shaft of the engine 1, that is coupled to a flywheel 21 (FIG. 3) of the automatic clutch 2. The rotational speed of the crankshaft 11 (an engine rotational speed Ne) is detected by an engine rotational speed sensor 401.

An intake system of the engine 1 is provided with an electronically-controlled throttle valve 12 that can reduce the amount of intake air as needed through the driving of a throttle motor 13. An opening degree of this throttle valve 12 is detected by a throttle opening degree sensor 402.

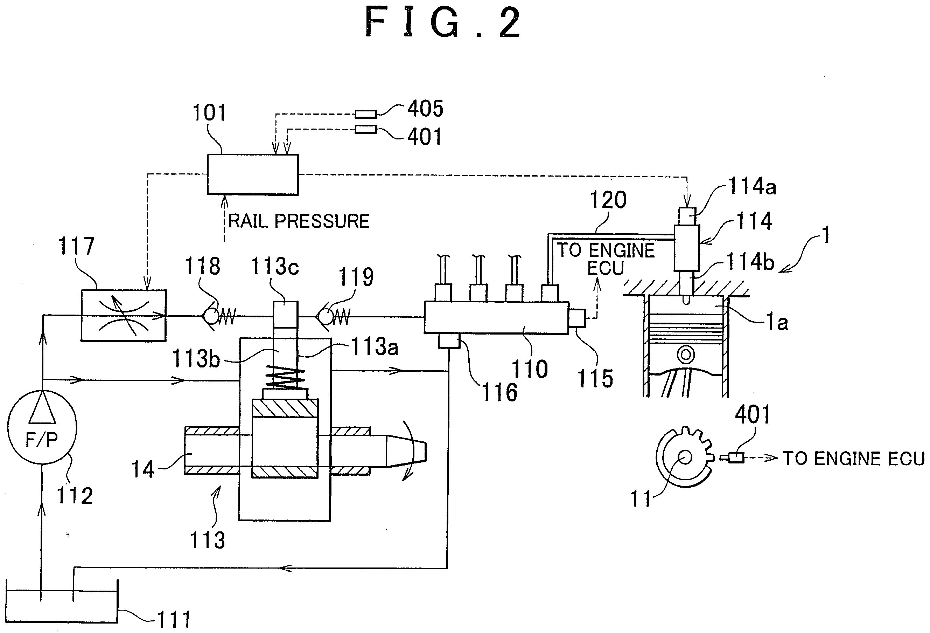

Next, the fuel injection system of the engine 1 will be described. FIG. 2 is an overall schematic view showing the fuel injection system of the engine 1 according to this embodiment of the invention. The fuel injection system shown in this FIG. 2 is equipped with a common rail 110 as a pressure accumulation container for accumulating high-pressure fuel, a high-pressure fuel pump 113 that pressurizes fuel pumped up from a fuel tank 111 by a feed pump 112 to supply the common rail 110 with the pressurized fuel, an injector (a fuel injection valve) 114 that injects the high-pressure fuel supplied from the common rail 110 into a cylinder (a combustion chamber 1a) of the engine 1, and the engine ECU 101 that electronically controls this fuel injection system.

The common rail 110 has a target fuel pressure set by the engine ECU 101, and accumulates the high-pressure fuel supplied from the high-pressure fuel pump 113 at the target fuel pressure. Further, this common rail 110 is fitted with a pressure sensor (fuel pressure detection means) 115 that detects the pressure of the accumulated fuel (hereinafter referred to as a rail pressure) and outputs the detected rail pressure to the engine ECU 101, and a relief valve 116 that may be opened to reduce the rail pressure.

The high-pressure fuel pump 113 is equipped with a plunger 113b that reciprocates in a cylinder 113a in synchronization with the rotation of a cam shaft 14 that rotates while receiving a driving force from the crankshaft 11 of the engine 1, and an electromagnetic metering valve 117 that meters the amount of fuel that is drawn from the feed pump 112 into a pressurization chamber 113c in the cylinder 113a. In this high-pressure fuel pump 113, when the plunger 113b moves from top dead center toward bottom dead center in the cylinder 113a, the fuel delivered by the feed pump 112 is metered by the electromagnetic metering valve 117, and the metered fuel presses suction valve 118 open and is drawn into the pressurization chamber 113c. After that, when the plunger 113b moves from the bottom dead center toward the top dead center in the cylinder 113a, the fuel in the pressurization chamber 113c is pressurized by the plunger 113b, presses a discharge valve 119 open, and is force-fed to the common rail 110. The electromagnetic metering valve 117 is controlled through a control signal from the engine ECU 101 to make a passage area of a fuel supply path variable. By changing this passage area, the electromagnetic metering valve 117 meters the amount of the fuel introduced into the pressurization chamber 113c and adjusts the discharge pressure of the fuel from the high-pressure fuel pump 113, thereby adjusting the rail pressure. More specifically, when no fuel is injected (when fuel injection is suspended), for example, when the opening degree of an accelerator is "0", the electromagnetic metering valve 117 is fully closed. On the other hand, to increase the rail pressure, the opening degree of the electromagnetic metering valve 117 is also increased.

The injector 114 is provided in each cylinder of the engine 1, and is connected to the common rail 110 via a high-pressure pipeline 120. This injector 114 is equipped with an electromagnetic valve 114a that operates on the basis of a command of the engine ECU 101, and a nozzle 114b that injects fuel during energization of this electromagnetic valve 114a. The electromagnetic valve 114a opens/closes a low-pressure passage leading to a low-pressure side from a pressure chamber to which high-pressure fuel in the common rail 110 is supplied. The electromagnetic valve 114a opens the low-pressure passage during energization, and shuts off the low-pressure passage during the stoppage of energization.

A needle for opening/closing an injection hole is provided in the nozzle 114b, and the pressure of the fuel in the pressure chamber forces the needle in a valve-closing direction (a direction in which the injection hole is closed). Accordingly, when the low-pressure passage is opened through energization of the electromagnetic valve 114a and the pressure of the fuel in the pressure chamber falls, the needle rises in the nozzle 114b to open the valve (opens the injection hole). Thus, the high-pressure fuel supplied from the common rail 110 is injected into the cylinder from the injection hole. On the other hand, when the low-pressure passage is shut off through the stoppage of energization of the electromagnetic valve 114a and the pressure of the fuel in the pressure chamber rises, the needle falls in the nozzle 114b to close the valve and hence terminate injection.

The engine rotational speed sensor 401 that detects an engine rotational speed on the basis of pulse waves sent out as a result of rotation of the crankshaft 11, an accelerator opening degree sensor 405 that detects an accelerator opening degree (an engine load), the pressure sensor 115 that detects the rail pressure, and the like are connected to the engine ECU 101. On the basis of pieces of sensor information detected by these sensors 401, 405, and 115, the engine ECU 101 calculates a target rail pressure of the common rail 110 and an injection timing, an injection amount, and the like suited for an operation state of the engine 1, and electronically controls the electromagnetic metering valve 117 of the high-pressure fuel pump 113 and the electromagnetic valve 114a of the injector 114 in accordance with a result of the calculation.

Further, in fuel injection control by the engine ECU 101, a pilot injection of a minute amount of fuel is carried out before the main injection carried out at the beginning of an expansion stroke. Further, pilot injection amount learning control (hereinafter referred to simply as learning control) for appropriately determining the pilot injection amount is performed. The details of this learning control will be described later. As described above, by carrying out pilot injection of a minute amount of fuel before main injection, diffuse combustion during main injection can be activated to shorten an ignition delay time from fuel injection to ignition. As a result, the level of combustion noise and a reduction in the discharge amount of NOx are reduced.

- Automatic Clutch · Transmission - Next, the concrete construction of the automatic clutch 2 will be described with reference to FIG. 3.

The automatic clutch 2 according to this embodiment of the invention is equipped with a dry single disk friction clutch 20 (hereinafter referred to simply as "the clutch 20") and a clutch operation device 200.

The clutch 20 is equipped with a flywheel 21, a clutch disk 22, a pressure plate 23, a diaphragm spring 24, a clutch cover 25, and the like.

The flywheel 21 is fitted to the crankshaft 11. In addition, the clutch cover 25 is fitted to the flywheel 21 in a state that the clutch cover 25 is rotatable with the flywheel 21. The clutch disk 22 is spline fitted to an input shaft 31 of the transmission 3. The clutch disk 22 is disposed facing the flywheel 21.

The pressure plate 23 is disposed between the clutch disk 22 and the clutch cover 25. This pressure plate 23 is pressed against the flywheel 21 side by an outer peripheral portion of the diaphragm spring 24. Since this pressure plate 23 is pressed, frictional forces are generated between the clutch disk 22 and the pressure plate 23 and between the flywheel 21 and the clutch disk 22 respectively. Due to these frictional forces, the clutch 20 is connected (engaged), and the flywheel 21, the clutch disk 22, and the pressure plate 23 rotate integrally.

When the clutch 20 is thus engaged, a power is transmitted from the engine 1 to the transmission 3. A torque transmitted from the engine 1 to the transmission 3 via the clutch 20 as a result of the transmission of this power is called "a clutch torque". This clutch torque is almost "0" when the clutch 20 is disengaged, increases as the clutch 20 is gradually engaged to reduce the amount of slippage of the clutch disk 22, and finally coincides with a rotational torque of the crankshaft 11 when the clutch 20 is completely engaged.

The clutch operation device 200 is equipped with a release bearing 201, release fork 202, a hydraulic clutch actuator 203, a hydraulic circuit 204, and the like. The clutch operation device axially displaces the pressure plate 23 of the clutch 20 to set a state in which the clutch disk 22 is securely sandwiched between the pressure plate 23 and the flywheel 21 or separated therefrom.

The release bearing 201 is moveably fitted to the input shaft 31 of the transmission 3 along the axial direction of the input shaft 31, and abuts a central region of the diaphragm spring 24.

The release fork 202 moves the release bearing 201 toward the flywheel 21. The clutch actuator 203 has a cylinder 203a and a piston rod 203b. By advancing/retreating the piston rod 203b with the aid of a hydraulic pressure, the release fork 202 may be turned about a fulcrum 202a.

The hydraulic circuit 204 is a circuit that controls the hydraulic pressure of hydraulic oil supplied to the clutch actuator 203. The hydraulic circuit 204 is provided with a solenoid valve that operates a valve body through the energization of an exciting coil, and the like. By energizing the exciting coil of the solenoid valve or stopping energizing the exciting coil, the piston rod 203b of the clutch actuator 203 is advanced/retreated.

The transmission ECU 102 sends a solenoid control signal (a hydraulic pressure command value) to the clutch operation device 200 (the hydraulic circuit 204). The clutch actuator 203 is then driven in accordance with the solenoid control signal.

More specifically, when the clutch actuator 203 is driven to moves the piston rod 203b toward the release fork 202 from a position shown in FIG. 3 (i.e., when the clutch is engaged), the release fork 202 is turned (turned clockwise in FIG. 3). In accordance with the turning of the release fork 202, the release bearing 201 moves toward the flywheel 21. Due to this movement of the release bearing 201, the central region of the diaphragm spring 24, that is, that region of the diaphragm spring 24 which abuts the release bearing 201 moves toward the flywheel 21 (the diaphragm spring 24 is inverted). Thus, the pressing force of the pressure plate 23 from the diaphragm spring 24 decreases and the frictional forces decrease. In consequence, the clutch 20 is disengaged.

On the other hand, when the piston rod 203b of the clutch actuator 203 retreats from a clutch disengagement state, the pressure plate 23 is pressed against the flywheel 21 side due to an elastic force of the diaphragm spring 24. Owing to this pressing of the pressure plate 23, frictional forces are generated between the clutch disk 22 and the pressure plate 23 and between the flywheel 21 and the clutch disk 22 respectively. Due to these frictional forces, the clutch 20 is connected (engaged).

The transmission 3 is similar in construction to a conventional manual transmission such as a parallel gear-type transmission having six forward gears and one reverse gear or the like. The input shaft 31 of the transmission 3 is coupled to the clutch disk 22 of the clutch 20 (see FIG. 3). Further, as shown in FIG. 1, the rotation of the output shaft 32 of the transmission 3 is transmitted to driving wheels 7 via a drive shaft 4, a differential gear 5, an axle 6, and the like.

The rotational speed of the input shaft 31 of the transmission 3 is detected by the input shaft rotational speed sensor 403. Further, the rotational speed of the output shaft 32 of the transmission 3 is detected by an output shaft rotational speed sensor 404. A current gear may be determined on the basis of the ratio between rotational speeds (an output rotational speed/an input rotational speed) detected from these sensors, namely, the input shaft rotational speed sensor 403 and the output shaft rotational speed sensor 404.

The transmission 3 according to this embodiment of the invention is provided with a gear change operation device 300 having a shift fork, a select-and-shift shaft, and the like, and constitutes as a whole an automated (automatically controlled) manual transmission (AMT) that automatically changes gear.

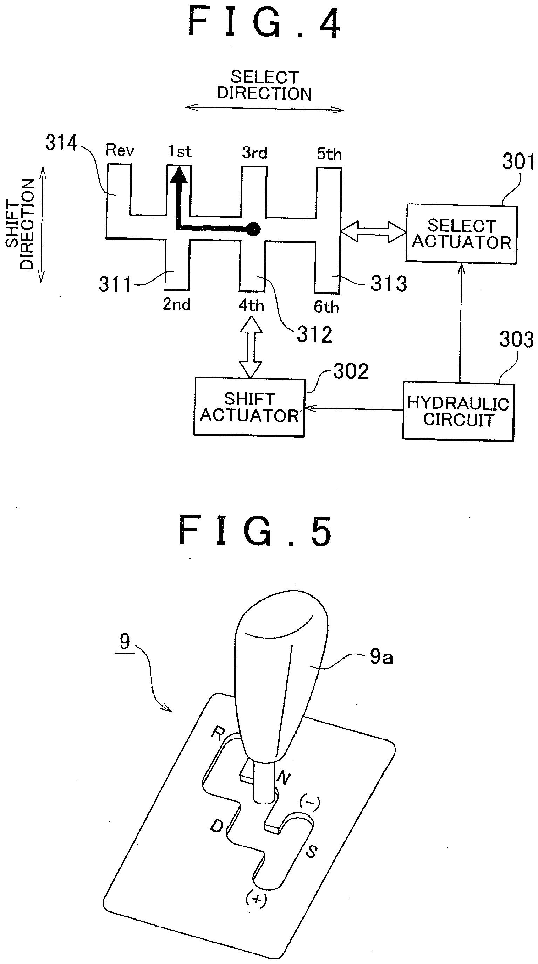

FIG. 4 is a view showing a gate groove in a guide plate provided integrally with the select-and-shift shaft and a peripheral portion thereof. As shown in FIG. 4, the gear change operation device 300 is equipped with a hydraulic select actuator 301 that performs an operation in a select direction (a select operation), a hydraulic shift actuator 302 that performs an operation in a shift direction (a shift operation), a hydraulic circuit 303 that controls the hydraulic pressures of hydraulic oil supplied to these actuators 301 and 302, and the like.

The gear change operation device 300 has a plurality of gates, where shift positions prescribing gears are arranged along the select direction. More specifically, as shown in FIG. 4, a first gate 311 prescribing a first gear (1st) and a second gear (2nd), a second gate 312 prescribing a third gear (3rd) and a fourth gear (4th), a third gate 313 prescribing a fifth gear (5th) and a sixth gear (6th), and a fourth gate 314 prescribing a reverse gear (Rev) are arranged along the select direction.

Changing between gears (e.g., from neutral (N) to the first speed (1st)) may then be made by driving the shift actuator 302 with one of these gates, namely, the first gate 311, the second gate 312, the third gate 313, and the fourth gate 314 (e.g., the first gate 311) selected by the driving of the select actuator 301.

The hydraulic circuit 303 is provided with a solenoid valve that operates a valve body through the energization of an exciting coil, and the like. The supply of hydraulic pressure to each of the actuators, namely, the select actuator 301 and the shift actuator 302 or the release of the hydraulic pressure therefrom can be controlled by energizing the exciting coil of the solenoid valve or stopping the energization thereof.

A solenoid control signal (a hydraulic pressure command value) from the transmission ECU 102 is sent to the hydraulic circuit 303 of the gear change operation device 300 described above. Driving of the select actuator 301 and driving of the shift actuator 302 are controlled individually on the basis of the solenoid control signal. As a result, the select operation and shift operation of the transmission 3 may be automatically performed.

A shift device 9 is disposed near the driver seat. As shown in FIG. 5, the shift device 9 is displaceably provided with a shift lever 9a. Further, a reverse (R) position, a neutral (N) position, a drive (D) position, and a sequential (S) position are set for the shift device 9, and the driver may move the shift lever 9a to the desired gear change position. A shift position sensor 406 detects the gear change position (including also a "+" position and a "-" position as will be described below) in which the shift lever 9a is engaged (see FIG. 1).

A situation in which each of those gear change positions is selected and an operation mode of the transmission 3 at that time will be described hereinafter individually as to each of the gear change positions ("the N position", "the R positions", "the D position", and "the S position").

"The N position" is selected to decouple the input shaft 31 from the output shaft 32 in the transmission 3. When the shift lever 9a is operated to "the N position", gear pairs of the transmission 3, that is, input gear groups 33 do not mesh with output gear groups 34 in the transmission 3. As a result, the transmission of power between respective gear change trains interrupted.

"The R position" is the position selected to retreat the vehicle. When the shift lever 9a is in the "R position", the transmission 3 is changed to the reverse gear.

"The D position" is the position selected to advance the vehicle. When the shift lever 9a is in the "D position", the plurality of the forward gears (six forward speeds) of the transmission 3 are automatically changed in accordance with the driving state of the vehicle or the like. That is, changing between gears in an automatic mode is made.

"The S position" is the position that is selected when the driver manually change gears between the plurality of the forward gears (the six forward speeds). The "-" position and the "+" position are provided in front of and behind this S position respectively. The "+" position is a position to which the shift lever 9a is operated to upshift the transmission. The "-" position is a position to which the shift lever 9a is operated to downshift the transmission.

When the shift lever 9a located at the S position is then operated to the "+" position or the "-" position on the assumption that the S position is a neutral position, the forward gears of the transmission 3 are upshifted or downshifted. More specifically, each time the shift lever 9a is operated to the "+" position, the transmission is sequentially upshifted to the next higher gear (e.g., 1st → 2nd → .. → 6th). Likewise, each time the shift lever 9a is operated to the "-" position, the transmission is sequentially downshifted to the next lower gear (e.g., 6th → 5th → .. → 1 st).

It should be noted that in addition to the shift lever 9a described above, an upshift paddle switch (an operation switch to the "+" position) and a downshift paddle switch (an operation switch to the "-" position) may be provided on the steering wheel, the steering column, or the like. In this case, when the shift lever 9a has been operated to the S position, the transmission may be sequentially upshifted to a next higher gear each time the upshift paddle switch is operated, the transmission may be sequentially downshifted to a next lower gear each time the downshift paddle switch is operated. Further, the shift lever 9a may be omitted so that manual gear changes are performed using only the paddle switches. With this configlation, an automatic mode switch for selecting "an automatic mode" and a reverse switch for selecting "retreat (reverse)" may be provided on an instrument panel or a console panel. Further, a neutral switch for selecting "neutral" may be provided as needed.

- Engine ECU, Transmission ECU - The engine ECU 101 drives the engine 1 by controlling a mixture supplied to the engine 1 and the combustion timing in accordance with a traveling situation.

The transmission ECU 102 controls the gear change operation device 300 to establish an appropriate gear, namely, an appropriate power transmission path in the transmission 3.

Further, these ECUs, namely, the engine ECU 101 and the transmission ECU 102 are connected to each other such that information necessary for engine control and transmission control may be exchanged (e.g., through CAN communication) therebetween.

The engine ECU 101 and the transmission ECU 102 are conventional electronic control units (ECUs). Although not shown, each of the engine ECU 101 and the transmission ECU 102 is equipped with a central processing unit (CPU), a read only memory (ROM), a random access memory (RAM), a backup RAM, and the like.

Various control programs and maps referred to in executing the various control programs, for example, are stored in the ROM. The CPU performs calculation processings on the basis of the various control programs and maps stored in the ROM. The RAM is a memory that temporarily stores, for example, calculation results of the CPU, data input from the respective sensors. The backup RAM is a non-volatile memory that stores, for example, the data to be saved when the engine 1 is stopped.

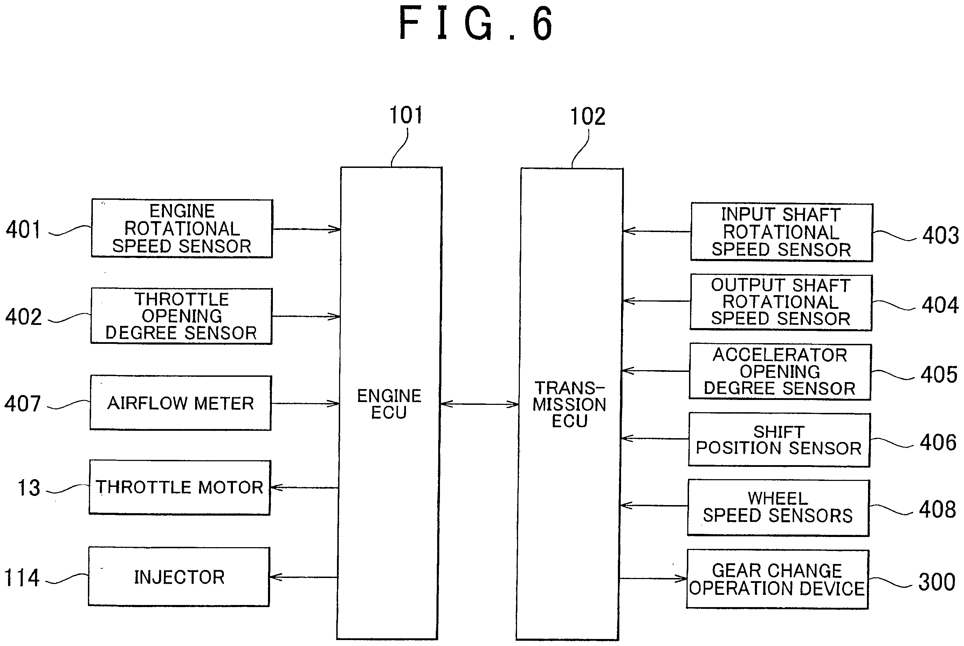

As shown in FIG. 6, various sensors that detect an operation state of the engine 1, such as the engine rotational speed sensor 401, the throttle opening degree sensor 402, an airflow meter 407 that detects an intake air amount, and the like are connected to the engine ECU 101. Signals of the respective sensors are input to the engine ECU 101. Further, this engine ECU 101 controls respective portions of the engine 1 such as the throttle motor 13, the injector 114, and the like. The engine ECU 101 controls the fuel injection amount, fuel injection timing, and the like of the injector 114.

The input shaft rotational speed sensor 403, the output shaft rotational speed sensor 404, the accelerator opening degree sensor 405, the shift position sensor 406, wheel speed sensors 408 that detect speeds (wheel speeds) of the driving wheels 7, and the like are connected to the transmission ECU 102.

Further, this transmission ECU 102 may output a solenoid control signal (a hydraulic pressure command signal) to the gear change operation device 300. A linear solenoid valve, an on-off solenoid valve, and the like, which are installed in the hydraulic circuit 303 of the gear change operation device 300, are controlled on the basis of this solenoid control signal. The respective actuators 301 and 302 are then controlled so that the gear is changed to a predetermined gear (the first to sixth gear, the reverse gear, or the like).

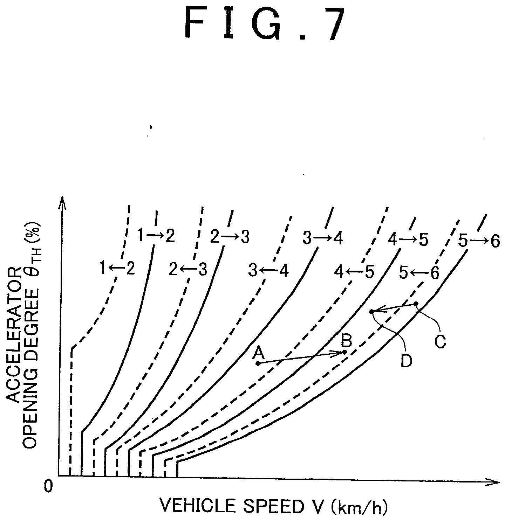

- Gear change Map - Gear change control of the transmission 3 in the "automatic mode" is executed in accordance with, for example, a gear change map (a gear change condition) as shown in FIG. 7. This gear change map includes a plurality of areas for setting an appropriate gear are set in accordance with a vehicle speed V and an accelerator opening degree θ_{TH}, using the vehicle speed V and the accelerator opening degree θ_{TH} as parameters, and is stored in the ROM of the transmission ECU 102. The respective areas of the gear change map are divided by a plurality of gear change lines (lines for changing between gears). It should be noted in the gear change map shown in FIG. 7 that upshift lines (gear change lines) are denoted by solid lines, and that downshift lines (gear change lines) are denoted by broken lines. Further, gears changed corresponding to respective upshift line and respective downshift line are shown in FIG. 7 using figures and arrows.

The operation in "the automatic mode" in which the shift lever 9a has been operated to "the drive (D) position" will be described.

The transmission ECU 102 calculates the vehicle speed V from an output signal of the output shaft rotational speed sensor 404, calculates the accelerator opening degree θ_{TH} from an output signal of the accelerator opening degree sensor 405, and calculates a target gear on the basis of the vehicle speed V and the accelerator opening degree θ_{TH} with reference to the gear change map of FIG. 7. Furthermore, the transmission ECU 102 calculates a ratio between rotational speeds (output rotational speed/input rotational speed) obtained from output signals of the input shaft rotational speed sensor 403 and the output shaft rotational speed sensor 404 to determine the current gear, and compares the current gear with the target gear to determine whether or not a gear change operation is necessary.

When it turns out from a result of the determination that the gear change operation is not necessary (when the current gear is the same as the target gear, that is, the appropriate gear is set), a solenoid control signal (a hydraulic pressure command signal) for maintaining the current gear is output to the gear change operation device 300 of the transmission 3.

However, when the current gear is different from the target gear, the gear change control is executed. For example, if the vehicle is traveling with the transmission 3 in "the fourth gear", that is, a travel state indicated by point A in FIG. 7, and the travel state is sequentially changed to travel state indicated by point B, this change crosses the upshift line [4 → 5]. Accordingly, the target gear calculated from the gear change map is "the fifth gear". A solenoid control signal (a hydraulic pressure command signal) to set the fifth gear is output to the gear change operation device 300 to initiate a gear change from the fourth gear to the fifth gear (to upshift from the fourth gear to the fifth gear).

Further, for example, if the vehicle is traveling with the transmission 3 in "the sixth gear", that is, a travel state indicated by point C in FIG. 7, and the travel state is sequentially changed into a travel state indicated by point D, the change crosses the downshift line [6 → 5]. Accordingly, the target gear calculated from the gear change map is "the fifth gear". A solenoid control signal (a hydraulic pressure command signal) to set the fifth gear is output to the gear change operation device 300 to initiate a gear change from the sixth gear to the fifth gear (to downshift from the sixth gear to the fifth gear).

- Minute Fuel Injection Amount Learning Control - Next, the outline of minute fuel injection amount learning control (which is also called minute injection control or minute Q control) will be described. This minute fuel injection amount learning control is intended to acquire a learning value corresponding to, for example, time-dependent changes in the fuel injection amount of the injector 114 (changes in injection characteristics). That is, the minute fuel injection amount learning control is intended to acquire a learning value that serves to reduce a discrepancy between a minute fuel injection amount as a target (a command value for the minute fuel injection amount: a target fuel injection amount) and an actual minute fuel injection amount (an actual fuel injection amount).

The minute fuel injection amount learning control is performed when the vehicle is running with no load applied to the engine. More specifically, when no fuel is injected with the command injection amount for the injector 114 equal to 0 (e.g., when the accelerator opening degree becomes equal to "0" while running), single injection is carried out by injecting an extremely small amount of fuel tantamount to a pilot injection amount of fuel into a specific one of the cylinders (e.g., that one of the cylinders whose piston is located close to a top dead center), and a change in engine rotational speed resulting from this single injection or the like (an amount of change in the operation state of the engine) is recognized. Data on the amount of change in the operation state of the engine in the case where exact single injection is carried out are then compared with an amount of change in the operation state of the engine in the case where single injection is actually carried out, and the learning value on the pilot injection amount setting map is corrected in accordance with a discrepancy therebetween. This operation is performed individually for respective common rail pressures on the pilot injection amount setting map and for the respective cylinders. As a result, the pilot injection can be carried out in an appropriate pilot injection amount regardless of the common rail pressure for all the cylinders.

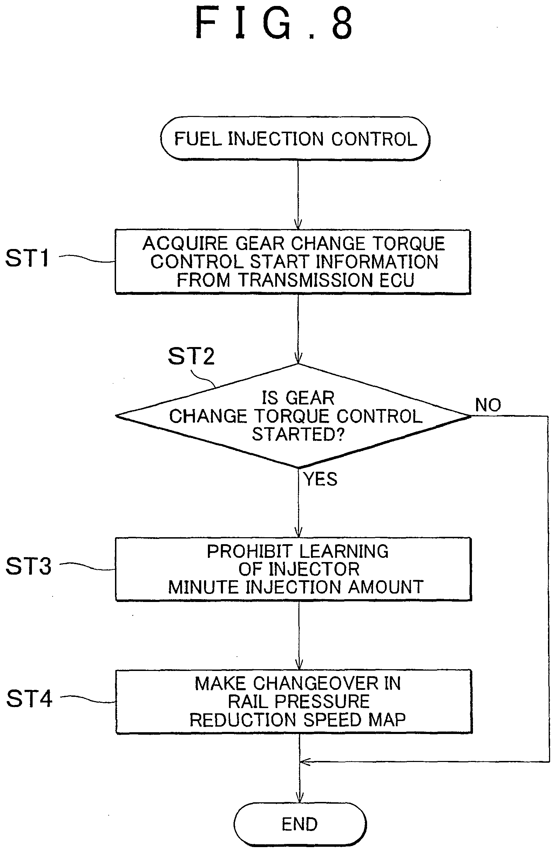

However, when single injection is carried out in the learning control, the following inconvenience may conventionally occur in a situation where the common rail pressure is relatively high, that is, in a situation where a learning operation is performed with the learning fuel pressure set high. When there is a torque increase request from the transmission ECU 102 through the driver's operation of depressing the accelerator pedal 8 or the like, a relatively large amount of fuel is injected into the cylinder within a short time to meet the request. In this case, even when the learning operation is suspended, fuel injection is started with the common rail pressure still remaining relatively high. Thus, rapid combustion of the mixture occurs to cause a relatively loud combustion noise. In this embodiment of the invention, the following fuel injection control is performed to eliminate this inconvenience. This fuel injection control will be concretely described with reference to a flowchart of FIG. 8. A routine shown in this FIG. 8 is executed at intervals of a predetermined time or each time the crankshaft 11 rotates by a predetermined angle, during the minute fuel injection amount learning control.

First, in step ST1, gear change torque control start information is acquired from the transmission ECU 102. As this gear change torque control start information, for example, when the travel state of the vehicle changes across one of the downshift lines or one of the upshift lines as described above, an "ON" signal is output from the transmission ECU 102. When there is no change in the travel state across any of the gear change lines, an "OFF" signal is output from the transmission ECU 102.

After that, a transition to step ST2 is made to determine whether or not the gear change torque control start information is information for starting gear change torque control (the "ON" signal).

In this case, when the gear change torque control start information is the "OFF" signal, It is determined that there is no request for a gear and the present routine is temporarily terminated.

On the other hand, when the gear change torque control start information is the "ON" signal, it is determined that there is a request for a gear change, that is, the travel state of the vehicle has changed into a state across one of the gear change lines. Thus, the learning control (injector minute injection amount learning control) is prohibited in step ST3 (the prohibition of the learning of the fuel injection amount by learning control prohibition means). If the target common rail pressure is set high in the learning control, the common rail pressure is lowered with the prohibition of this learning control. For example, the supply of fuel from the high-pressure fuel pump 113 is stopped through full closure of the electromagnetic metering valve 117and the like, or fuel in the common rail 110 is recovered to the fuel tank 111 by opening the relief valve 116 (fuel pressure reduction control).

Further, a pressure reduction speed in the common rail 110 in this case is determined by step ST4 through a changeover to a pressure reduction speed map used exclusively for a gear change learning control prohibition state. The ROM of the engine ECU 101 has stored therein two pressure reduction speed maps for determining the pressure reduction speed in the common rail 110 using the engine rotational speed and the like as parameters, which are used for a normal state and the gear change learning control prohibition state respectively. The opening degrees of the electromagnetic metering valve 117 and the relief valve 116 are adjusted so that the pressure reduction speed calculated according to this pressure reduction speed map is obtained. In this step ST4, a changeover of this pressure reduction speed map is made from the map for the normal state to the map for the gear change learning control prohibition state. For example, the operation of setting the opening degree of the relief valve 116 higher to increase the pressure reduction speed as the engine rotational speed increases is performed. The operation of setting the pressure reduction speed is not limited to this operation. In the gear change learning control prohibition state, the pressure reduction speed may be set higher than when the gear change learning control is not prohibited.

Thus, at a time point when the travel state of the vehicle has changed into a state across one of the gear change lines and a torque increase request signal has not been output from the transmission ECU 102 yet, the operation of lowering the internal pressure of the common rail 110 is started. That is, even in a situation where the common rail pressure during the learning control is relatively high, the common rail pressure has sufficiently fallen at a timing when the fuel injection amount starts to be increased in response to the torque increase request of the transmission ECU 102. Accordingly, the occurrence of a situation where a relatively large amount of fuel is injected into the cylinder within a short time and rapid combustion of the mixture occurs to cause a loud combustion noise is suppressed.

Especially when there is adopted a construction in which the pressure reduction speed is made adjustable and the common rail pressure can be rapidly lowered as in the aforementioned step ST4, fuel injection corresponding to the torque increase request of the transmission ECU 102 is started with the common rail pressure sufficiently lowered, even in the case of the transmission 3 whose gear change time is set relatively short. Therefore, the effect of suppressing a combustion noise can further be enhanced.

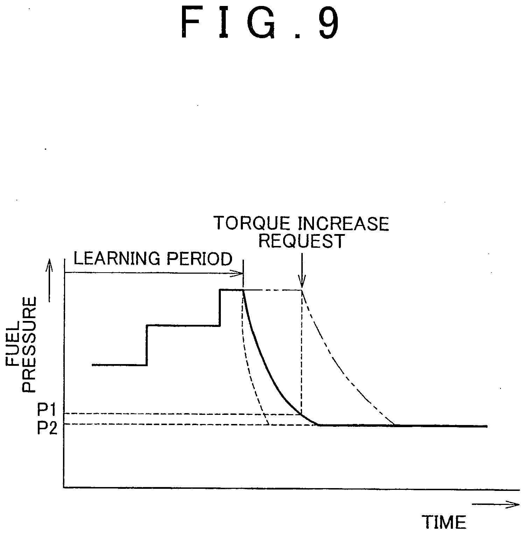

FIG. 9 is a view showing changes in fuel pressure (common rail pressure) in the case where the learning control is prohibited in a situation where the common rail pressure is relatively high during the learning control as described above. Alternative long and two short dashes lines in FIG. 9 represent conventional changes in fuel pressure. In this case, namely, the learning control is prohibited in response to a torque increase request from the transmission ECU. On the other hand, a solid line in FIG. 9 represents changes in fuel pressure in the case where the learning control is prohibited at a time point when a gear change request is made prior to the outputting of a torque increase request from the transmission ECU and the internal pressure of the common rail 110 is lowered by, for example, adjusting the opening degree of the electromagnetic metering valve 117. In this case, the fuel pressure at a timing when fuel injection from the injector 114 is started in response to a torque increase request from the transmission ECU is indicated by Pl in FIG. 9, and the pressure has fallen sufficiently. In addition, broken curves in FIG. 9 represent changes in fuel pressure in the case where the pressure reduction speed is set high by, for example, setting the opening degree of the relief valve 116 high. In this case, the fuel pressure at a timing when fuel injection from the injector 114 is started in response to a torque increase request from the transmission ECU is indicated by P2 in FIG. 9, and the pressure has fallen further.

As described above, according to this embodiment of the invention, the internal pressure of the common rail 110 can be more rapidly lowered in response to the prohibition of the learning control than in the conventional art. As a result, the effect of suppressing a combustion noise can be achieved well.

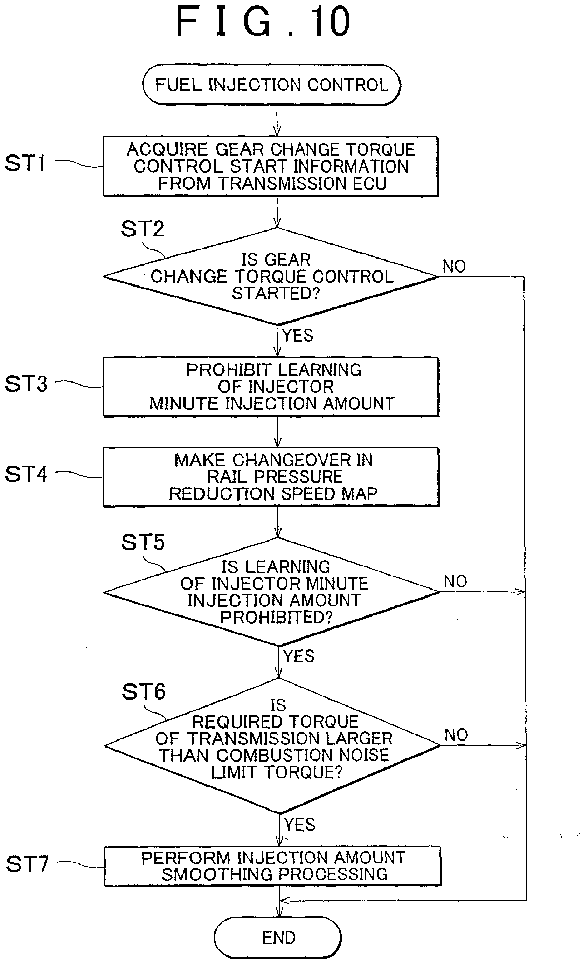

(Modification Example) Next, a modification example of the embodiment of the invention will be described. This modification example is a measure against a case where the required torque of the transmission ECU 102 is relatively large. This modification example will be concretely described hereinafter with reference to a flowchart of FIG. 10. A routine shown in this FIG. 10 is also executed at intervals of a predetermined time or each time the crankshaft 11 rotates by a predetermined angle, during the minute fuel injection amount learning control. Further, the operations of steps ST1 to ST4 in the flowchart shown in this FIG. 10 are identical to the operations of steps ST1 to ST4 shown in FIG. 8 in the foregoing embodiment of the invention, and therefore are not described herein.

After the operations during the prohibition of the learning control in steps ST3 and ST4 are performed, a transition to step ST5 is made. In this step ST5, it is determined whether or not these learning control prohibition operations are being performed. That is, it is determined whether or not the gear change torque control is started during the minor fuel injection amount learning control and the learning control is prohibited although the learning control should intrinsically be performed. When the result of this determination is NO, the present routine is temporarily terminated.

On the other hand, when the result of the determination is YES in step ST5, a transition to step ST6 is made to compare a torque required by the transmission ECU 102 with a preset combustion noise limit torque. It should be noted herein that the combustion noise limit torque is equivalent to a torque obtained from a fuel injection amount leading to the generation of a relatively loud combustion noise. That is, when the fuel injection amount is set such that a torque exceeding this combustion noise limit torque is obtained, the level of combustion noise is too high. The value of this combustion noise limit torque is calculated in advance through an experiment or a simulation, and is stored in, for example, the ROM of the engine ECU 101.

Then, when the torque required by the transmission ECU 102 is equal to or smaller than the combustion noise limit torque, the result of the determination in step ST6 is NO, and the present routine is terminated.

On the other hand, when the torque required by the transmission ECU 102 is larger than the combustion noise limit torque, the result of the determination in step ST6 is YES, and a transition to step ST7 is made. In this step ST7, smoothing control of the fuel injection amount is performed. That is, injection amount smoothing control similar to smoothing control of the fuel injection amount with respect to the amount of the operation of the accelerator by the driver is performed, with a view to suppressing an abrupt rise in torque to restrain the level of combustion noise from increasing.

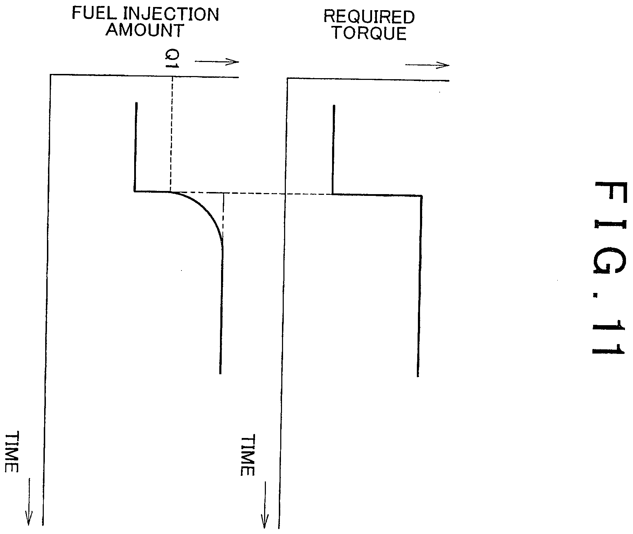

FIG. 11 is a view showing changes in the fuel injection amount with respect to the required torque in the case where such smoothing control of the fuel injection amount is performed. While a solid line represents changes in the fuel injection amount in the case where smoothing control is performed, alternate long and two short dashes lines represent changes in the fuel injection amount in the case where smoothing control is not performed. The smoothing control reduces an increase in the fuel injection amount per unit time when the required torque is larger than the combustion noise limit torque to less than the increase in the fuel injection amount per unit time when the required torque is equal to or smaller than the combustion noise limit torque. That is, when the torque required by the transmission ECU 102 is equal to or smaller than the combustion noise limit torque (when the result of the determination in step ST6 is NO), the control of changing the fuel injection amount as indicated by the alternate long and two short dashes lines to enhance the responsiveness of a gear change is performed. On the other hand, when the torque required by the transmission ECU 102 is larger than the combustion noise limit torque (when the result of the determination in step ST6 is YES), the control of changing the fuel injection amount as indicated by the solid line to suppress an increase in the level of combustion noise while sacrificing the responsiveness of a gear change to a certain extent is performed. In this case, as for the increase in the fuel injection amount per unit time in the initial stages of increasing the fuel injection amount, the fuel injection amount is rapidly increased as in the case where smoothing control is not performed. Upon exceeding a predetermined value (Q1 in FIG. 11), this increase in the fuel injection amount per unit time is reduced to perform smoothing control. Thus, a relatively fast gear change operation is enabled while suppressing an increase in the level of combustion noise.

In the embodiment of the invention described above and the modification example thereof, the case where the invention is applied to the transmission 3 mounted on a front-engine rear-drive (FR) vehicle and having six forward gears has been described. The invention is not limited to this case, but is also applicable to a transmission mounted on other types of vehicles such as a front-engine front-drive (FF) vehicle and the like. Further, the invention is also applicable to a transmission different in the number of gears from the transmission 3 (e.g., a transmission having five forward gears). Further, the fuel pressure reduction control may be designed to reduce the pressure of fuel at a timing when fuel injection corresponding to a torque request at the time of a gear change in the automatically controlled manual transmission is started (the common rail pressure) to such a fuel pressure that the level of combustion noise falls to or below a predetermined noise level.

## Claims

1. A fuel injection control device for a vehicular internal combustion engine (1) to which a transmission (3) is connected, wherein fuel injection is carried out from a fuel injection valve (114) into a specific cylinder (1a) of the internal combustion engine (1) and fuel injection amount learning control is performed to correct an fuel injection amount on a basis of a change in an operation state of the internal combustion engine (1) resulting from the fuel injection,
the fuel injection control device comprising learning control prohibition means (101) for prohibiting the fuel injection amount learning control at a timing when a request for a gear change in the transmission (3) is made during performance of the fuel injection amount learning control,
the fuel injection control device being **characterized in that** said transmission is an automatically controlled manual transmission, and **in that**
the learning control prohibition means (101) performs fuel pressure reduction control to reduce a pressure of fuel supplied to the fuel injection valve (114) substantially simultaneously with prohibition of the fuel injection amount learning control.

2. The fuel injection control device for the internal combustion engine according to claim 1, wherein
the fuel pressure reduction control is performed to reduce a pressure of fuel at a timing when fuel injection corresponding to a gear change in the automatically controlled manual transmission (3) is started to such a pressure that a level of combustion noise falls to or below a predetermined noise level.

3. The fuel injection control device for the internal combustion engine according to claim 1 or 2, further comprising:
smoothing control means (101) for performing smoothing control of a fuel injection amount during a gear change in the automatically controlled manual transmission (3) when a required torque of the internal combustion engine (1) required during the gear change in the automatically controlled manual transmission (3) is larger than a predetermined combustion noise limit torque.

4. The fuel injection control device for the internal combustion engine according to claim 3, wherein
the smoothing control means (101) reduces an increase in the fuel injection amount per unit time when the required torque is larger than the combustion noise limit torque to less than the increase when the required torque is equal to or smaller than the combustion noise limit torque.

5. The fuel injection control device for the internal combustion engine according to claim 1, wherein
the fuel pressure reduction control performed by the learning control prohibition means (101) has a pressure reduction speed that is higher than a pressure reduction speed of fuel pressure reduction control that is performed when the fuel injection amount learning control is not prohibited.

6. The fuel injection control device for the internal combustion engine according to any one of claims 1 to 5, wherein
the fuel injection amount learning control is performed to correct an fuel injection amount of a pilot injection.

## Patentansprüche

1. Kraftstoffeinspritzsteuerungsvorrichtung für einen Fahrzeugverbrennungsmotor (1), mit dem ein Getriebe (3) verbunden ist, wobei Kraftstoffeinspritzung von einem Kraftstoffeinspritzventil (114) in einen spezifischen Zylinder (1 a) des Verbrennungsmotors (1) erfolgt und Kraftstoffeinspritzmengenlernsteuerung durchgeführt wird, um eine Kraftstoffeinspritzmenge auf der Basis einer Änderung eines Betriebszustands des Verbrennungsmotors (1), die sich aus der Kraftstoffeinspritzung ergibt, zu korrigieren,
wobei die Kraftstoffeinspritzsteuerungsvorrichtung ein Lernsteuerungsverhinderungsmittel (101) zum Verhindern der Kraftstoffeinspritzmengenlernsteuerung zu einem Zeitpunkt umfasst, zu dem eine Anforderung eines Gangwechsels in dem Getriebe (3) während des Durchführens der Kraftstoffeinspritzmengenlernsteuerung erfolgt,
wobei die Kraftstoffeinspritzsteuerungsvorrichtung **dadurch gekennzeichnet ist, dass** das Getriebe ein automatisch gesteuertes manuelles Getriebe ist, und dadurch, dass
das Lernsteuerungsverhinderungsmittel (101) eine Kraftstoffdruckreduktionssteuerung durchführt, um einen Druck von Kraftstoff, der dem Kraftstoffeinspritzventil (114) zugeführt wird, im Wesentlichen gleichzeitig mit dem Verhindern der Kraftstoffeinspritzmengenlernsteuerung zu reduzieren.

2. Kraftstoffeinspritzsteuerungsvorrichtung für den Verbrennungsmotor nach Anspruch 1, wobei
die Kraftstoffdruckreduktionssteuerung durchgeführt wird, um einen Kraftstoffdruck zu einem Zeitpunkt, zu dem Kraftstoffeinspritzung entsprechend einem Gangwechsel in dem automatisch gesteuerten manuellen Getriebe (3) gestartet wird, auf einen derartigen Druck zu reduzieren, dass ein Verbrennungsgeräuschpegel auf oder unter einen vorgegebenen Geräuschpegel fällt.

3. Kraftstoffeinspritzsteuerungsvorrichtung für den Verbrennungsmotor nach Anspruch 1 oder 2, ferner umfassend:
Glättungssteuerungsmittel (101) zum Durchführen von Glättungssteuerung einer Kraftstoffeinspritzmenge während eines Gangwechsels in dem automatisch gesteuerten manuellen Getriebe (3), wenn ein erforderliches Drehmoment des Verbrennungsmotors (1), das während des Gangwechsels in dem automatisch gesteuerten manuellen Getriebe (3) erforderlich ist, größer als ein vorgegebenes Verbrennungsgeräuschgrenzdrehmoment ist.

4. Kraftstoffeinspritzsteuerungsvorrichtung für den Verbrennungsmotor nach Anspruch 3, wobei
das Glättungssteuerungsmittel (101) einen Anstieg der Kraftstoffeinspritzmenge pro Zeiteinheit, wenn das erforderliche Drehmoment größer als das Verbrennungsgeräuschgrenzdrehmoment ist, auf weniger reduziert als den Anstieg, wenn das erforderliche Drehmoment kleiner gleich dem Verbrennungsgeräuschgrenzdrehmoment ist.

5. Kraftstoffeinspritzsteuerungsvorrichtung für den Verbrennungsmotor nach Anspruch 1, wobei
die Kraftstoffdruckreduktionssteuerung, die durch das Lernsteuerungsverhinderungsmittel (101) durchgeführt wird, eine Druckreduktionsgeschwindigkeit aufweist, die höher ist als eine Druckreduktionsgeschwindigkeit der Kraftstoffdruckreduktionssteuerung, die durchgeführt wird, wenn die Kraftstoffeinspritzmengenlernsteuerung nicht verhindert wird.

6. Kraftstoffeinspritzsteuerungsvorrichtung für den Verbrennungsmotor nach einem beliebigen der Ansprüche 1 bis 5, wobei
die Kraftstoffeinspritzmengenlernsteuerung durchgeführt wird, um eine Kraftstoffeinspritzmenge einer Voreinspritzung zu korrigieren.

## Revendications

1. Dispositif de commande d'injection de carburant pour un moteur à combustion interne de véhicule (1) auquel une transmission (3) est reliée, dans lequel l'injection de carburant est réalisée par une soupape d'injection de carburant (114) dans un cylindre spécifique (la) du moteur à combustion interne (1) et une commande d'apprentissage de quantité d'injection de carburant est réalisée pour corriger une quantité d'injection de carburant sur la base d'un changement d'un état de fonctionnement du moteur à combustion interne (1) résultant de l'injection de carburant,
le dispositif de commande d'injection de carburant comportant des moyens d'interdiction de commande d'apprentissage (101) destinés à interdire la commande d'apprentissage de quantité d'injection, de carburant à un moment où une demande de changement de vitesse dans la transmission (3) est faite pendant la réalisation de la commande d'apprentissage de quantité d'injection de carburant,
le dispositif de commande d'injection de carburant étant **caractérisé en ce que** ladite transmission est une transmission manuelle à commande automatique, et **en ce que**
les moyens d'interdiction de commande d'apprentissage (101) réalisent une commande de réduction de pression de carburant pour réduire une pression de carburant délivré à la soupape d'injection de carburant (114) de manière sensiblement simultanée à une interdiction de la commande d'apprentissage de quantité d'injection de carburant.

2. Dispositif de commande d'injection de carburant pour le moteur à combustion interne selon la revendication 1, dans lequel
la commande de réduction de pression de carburant est réalisée pour réduire une pression de carburant à un moment où une injection de carburant correspondant à un changement de vitesse dans la transmission manuelle à commande automatique (3) est commencée à une pression telle qu'un niveau de bruit de combustion tombe à ou en-dessous d'un niveau sonore prédéterminé.

3. Dispositif de commande d'injection de carburant pour le moteur à combustion interne selon la revendication 1 ou 2, comportant en outre :
des moyens de commande de lissage (101) destinés à réaliser une commande de lissage d'une quantité d'injection de carburant pendant un changement de vitesse de la transmission manuelle à commande automatique (3) quand un couple exigé du moteur à combustion interne (1) exigé pendant le changement de vitesse de la transmission manuelle à commande automatique (3) est plus grand qu'un couple de limite de bruit de combustion prédéterminé.

4. Dispositif de commande d'injection de carburant pour le moteur à combustion interne selon la revendication 3, dans lequel
les moyens de commande de lissage (101) réduisent une augmentation de la quantité d'injection de carburant par unité de temps quand le couple exigé est plus grand que le couple de limite de bruit de combustion à une valeur inférieure à l'augmentation quand le couple exigé est égal ou inférieur au couple de limite de bruit de combustion.

5. Dispositif de commande d'injection de carburant pour le moteur à combustion interne selon la revendication 1, dans lequel
la commande de réduction de pression de carburant réalisée par les moyens d'interdiction de commande d'apprentissage (101) a une vitesse de réduction de pression qui est plus élevée qu'une vitesse de réduction de pression de commande de réduction de pression de carburant qui est réalisée quand la commande d'apprentissage de quantité d'injection de carburant n'est pas interdite.

6. Dispositif de commande d'injection de carburant pour le moteur à combustion interne selon l'une quelconque des revendications 1 à 5, dans lequel
la commande d'apprentissage de quantité d'injection de carburant est réalisée pour corriger une quantité d'injection de carburant d'une injection pilote.
